# EUROPEAN PATENT APPLICATION

(11) **EP 4 480 302 A1**
(43) Date of publication of application: **25.12.2024**
(21) Application number: 22926365.2
(22) Date of filing: 18.02.2022
(51) Int. Cl.: A01G 25/02, A01G 25/16

(54) **IRRIGATION SYSTEM AND METHOD FOR CONTROLLING AND MANAGING IRRIGATION**

(71) Applicant: Q&CO Spa, Las Condes Santiago (CL)
(72) Inventor: QUEVEDO POKLUDA, Rodrigo Eduardo, Santiago (CL); QUEVEDO SUÁREZ, Isidora, Santiago (CL)
(74) Representative: Mendigutía Gómez, Maria Manuela
(86) International application number: PCT/CL2022/050017
(87) International publication number: WO 2023/155024

(57) **Abstract**

An irrigation system (1) which allows, in real time and automatically, to measure the flow of water and alert about anomalies in the normal operation of the system, such as the detection of water leaks and/or the non-operation of any of its components, thus optimizing its consumption and facilitating the user experience, wherein the irrigation system comprises at least one water supply means, to supply water to the irrigation system (1); at least one pipe (10) connected at one end to the water supply and extending across the surface to be irrigated; at least one valve (11) arranged in the at least one pipe (10) to control the flow of water through it; at least one sprinkler (12) connected to at least one outlet of the at least one pipe (10); at least one flowmeter (13) to measure the flow of water; at least one control means (14) to control the operation of the irrigation system (1); at least one cable (15) connected to the at least one control means (14) to energize the at least one valve (11); and at least one climatic data storage means (16) which sends at least one evapotranspiration data from the geographical area of the irrigation system operation (1) to at least one control means (14). A method of irrigation control and management.

## Description

The present invention refers to an irrigation system and a method of irrigation control and management, which allow in real time and automatically, to measure the flow of water and alert on anomalies in the normal operation of the system, such as detection of water leaks and/or the non-operation of any of its components, thus optimizing its consumption and facilitating the user experience.

Specifically, the system and method of the invention provides a solution that can be used both in gardens for domestic use and in industrial spaces that require an automated irrigation process.

In this sense, the system of the invention essentially comprises at least one water supply means for supplying water to the irrigation system; at least one pipe connected at one end to the water supply and extending across the surface to be irrigated; at least one valve, arranged in the at least one pipe to control the flow of water therethrough; at least one sprinkler connected to at least one outlet of the at least one pipe; at least one flowmeter to measure the flow of water; at least one control means to control the operation of the irrigation system; at least one cable connected to the at least one control means for energizing the at least one valve; and at least one climatic data storage means which sends at least one evapotranspiration data from the geographical area of the irrigation system operation to the at least one control means.

On the other hand, the method of the invention essentially comprises the steps of turning on at least one control means which energizes at least one valve through at least one cable; selecting an irrigation program or immediately starting the irrigation process in the at least one control means; identifying at least one pipe associated with the at least one valve which forms at least one irrigation circuit; counting at least one sprinkler associated with the at least one valve; specifying at least one irrigation angle of the at least one sprinkler; storing at least one area associated with the at least one irrigation circuit; calculating the amount of water that will be irrigated on each area associated with the at least one irrigation circuit; incorporating into the data delivered to the at least one irrigation circuit the proportion of water that the at least one sprinkler will provide depending on its irrigation angle; assigning a crop factor (Kc) to the at least one irrigation circuit depending on the species to be irrigated that have been assigned to it; supplying water from at least one water supply means for a given time; measuring the flow of water through at least one flowmeter in the at least one irrigation circuit associated with the at least one valve; storing water flow data; storing a user-defined watering schedule; communicating the at least one control means with at least one climate data storage means, to receive at least one evapotranspiration value of the geographical area of operation of the irrigation system; storing the at least one evapotranspiration value to irrigate during the same day it is received or the next, depending on the irrigation schedule defined in stage m, the amount of rain fallen in that geographical area and the water demand of the area associated with the irrigation circuit; calculating the daily water demand for the at least one irrigation circuit; calculating the irrigation time for the at least one irrigation circuit for each irrigation event that occurs during the day; waiting for the next irrigation event according to the irrigation schedule defined in step m; watering the at least one irrigation circuit; repeating the stages j) and k) each time an irrigation event is carried out; and repeating stages a)-s) automatically and with a frequency depending on the water balance to be replaced daily for the set of areas associated with the at least one irrigation circuit.

From the system and method of the invention, it is possible to maintain constant monitoring of water consumption in addition to other functionalities among which the detection of defective components, such as sprinklers, and the ability of the system to be implemented in irrigation systems installed previously, without the need to carry out civil works that increase the cost and delay their start-up.

### BACKGROUND

Nowadays, it is increasingly common to have irrigation systems for domestic or industrial use, that incorporate features capable of monitoring water consumption, to optimize its consumption. This is mainly due to the scarcity of water resources that exists in many countries around the world which is mainly caused by climate change. That is why, today, one of the main challenges of this type of systems is to achieve efficient use of water, to prevent or alert in case of malfunction or leaks and/or to be able to schedule the irrigation according to the climatic conditions existing at the place of operation.

In the industry, although there are solutions that try to address one or more of these problems, most of them aim to systems that only operate through time control, wherein the user programs the operation of the system, so that it waters a certain amount of time per day. However, this type of system does not guarantee an efficient use of water, since its operation depends entirely on what the user can do. Furthermore, none of these systems provide an alternative that can measure the evapotranspiration variable, to associate it with the area to be irrigated, to water daily what the nature included in said area requires to remain in an optimal state. Finally, none of these systems can integrate the functions of the irrigation controller with those of a flowmeter which may be able to operate on previously installed systems without the need to install additional cables to allow measurement of the water flow in the irrigation valves, and without intervening in the place through civil works that interfere with the environment or make the installation more expensive.

Therefore, there is a need to have irrigation systems that automatically determine their operation through evapotranspiration algorithms which take into consideration variables, such as temperature, radiation level, air humidity, soil humidity, soil pH, wind speed, rain probabilities, types of sprinklers, water flow, among others that can help to have a better estimate of the appropriate time to carry out the irrigation process, and information on these variables can be obtained through sensors located in the irrigation area or through information available in databases, wherein it is also necessary for these systems to be capable of measuring the flow of water (in liters or in another unit preferred by the user) which associated with the area to be irrigate and to the value delivered by evapotranspiration, will finally allow determining the precise amount of water that the irrigation area requires (in liters and not in minutes), thus optimizing water consumption. Additionally, systems are needed that are capable of detecting anomalies in operation (such as leaks or component malfunction), which is possible through continuous flow measurements through the flowmeter, which can operate in previously installed irrigation systems, integrating with the existing controller or included in new irrigation systems.

In the field of Patents, there are solutions that aim to irrigation systems that adjust daily to climatic conditions and that detect unplanned irrigation events with the objective of reducing water consumption. For example, US Patent Application US2004030456A1 describes a method and apparatus for analyzing meteorological data of the current microclimate, to generate irrigation programs according to the needs of the moment. The method and apparatus further transmit these irrigation programs to receivers within individual irrigation timers to adjust water application and to save water consumption. Microclimate meteorological data is applied to each irrigation timer according to actual local irrigation needs, wherein a water supply flow and start times are adjusted to distribute supply loads at water pumping stations. While each individual irrigation timer starts and stops independently according to the latest received programs, the transmitting authority or user always has immediate control over the operations of the device.

It is noted that the main difference between the present application and document US2004030456A1 is related to the fact that said document bases the determination of its irrigation programs depending on time, not considering at any time the area to be irrigated, nor the daily water demand of the land in liters.

On the other hand, although document US2004030456A1 does not describe the presence of sensors for measuring the conditions of temperature, humidity and radiation, it does describe the use of said variables but obtained through information from a database hosted on the Web along with information related to the state of the climate of the place of operation, to develop an evapotranspiration algorithm to determine the schedules and duration of irrigation. Additionally, this application describes the use of an ultrasonic flowmeter, capable of detecting failures in irrigation heads, as well as unusual flow values reporting such events. However, although Application US2004030456A1 addresses several of the problems indicated above, there is still a need to have an algorithm that has greater precision, incorporating additional environmental variables, such as soil pH. Furthermore, this Patent Application, although it describes the use of a flowmeter and its ability to detect anomalies in operating flow rates, it does not teach or suggest that said element may be connected to the same cables that energize a previously installed conventional irrigation system which does not have this component incorporated for measuring the water flow.

Another example is that disclosed in the Chinese Patent Application CN107821125A which describes an automatic irrigation system and a method for planting aquatic bamboo, wherein the system includes a local area network module of the irrigation center, a monitoring module of the irrigation center, a man-machine communication module, an irrigation center control module, a sensor module, an electromagnetic drive module and a solenoid valve. The irrigation center LAN module is used to provide network support for the irrigation center monitoring module, the man-machine communication module, the irrigation center control module, the sensor module and the electromagnetic drive module in the irrigation system. The sensor module includes a pressure flow sensor unit, a soil moisture sensor unit, a soil temperature sensor unit, a rain sensor unit, a leaf surface humidity sensor unit and a leaf surface temperature sensor unit.

In this case, once again it is observed that the main difference between the present Application and document CN107821125A is related to the fact that said document bases the determination of its irrigation programs depending on time, not considering at any time the area to be irrigated, as well as the daily water demand of the land in liters. On the other hand, although Application CN107821125A addresses several of the problems raised, said Application does not describe the use of additional variables for the calculation of the algorithm, such as radiation and soil pH. Furthermore, said Application, although it describes the use of a flow sensor, it does not teach or suggest that it can provide an alert in the event of detecting an abnormal flow or water leak in one or more of the irrigation branches. Additionally, the Application CN107821125A also does not describe the way in which the flow sensor is energized, so it does not disclose that it may be connected directly to the power cables used in a previously installed conventional irrigation system, without the need to carry out civil works.

Finally, the Chinese Patent Application CN110959506A describes an intelligent automatic irrigation system for tea crops comprising an environmental data acquisition unit, a weather forecast data acquisition unit, a data analysis unit, an operation unit, an irrigation equipment and a flowmeter. By adopting the method of environmental data and weather forecast data which are automatically captured, the data analysis unit accurately controls the irrigation time and irrigation amount, so that the utilization efficiency of the water resources is improved. In this case, the Application CN110959506A uses data related to the climate variables, such as temperature and humidity, as well as data about the climate forecast for the location of the system's operation to indicate the best time to proceed with the irrigation, however, as what was mentioned for the Application CN107821125A , the Application CN110959506A does not describe the use of other types of sensors, such as radiation or soil pH sensors, nor does it describe that the flowmeter can deliver an alert if it detects an abnormal flow or leak of water in one of the irrigation branches. Other characteristics that are not described by the Patent Application CN110959506A correspond to the way in which the flowmeter is energized, wherein nothing is mentioned about the possibility of connecting it directly to the cables used by the irrigation system to energize the solenoid valves in the different irrigation branches minimizing the interventions and resources used in their installation. Additionally, the system described in Application CN110959506A also does not address two other problems related to the system's ability to integrate with previously installed conventional automatic irrigation systems, as well as the possibility that the user or operator of the system can monitor in real time the operation of the system, being able to make decisions regarding irrigation or letting the system operate automatically, all through a mobile device. Finally, this document does not address the main characteristic of the present Application which aims to determine irrigation programs based on the area to be irrigated, as well as taking into consideration the daily water demand of the land in liters or another measurement unit preferred by the user.

In view of the prior art state, it is relevant to highlight the approach with which the system of the present invention determines irrigation programs which is not based on time ranges like most irrigation systems but rather uses data related with the area to be irrigated and the water demand of each of these areas that must be irrigated, among other variables. Furthermore, the system of the present invention has the capacity to provide a solution that not only allows irrigation processes to be programmed more effectively, by incorporating a greater number of variables from the environment and the operation of the system components themselves in the algorithm of evapotranspiration, but also allows the system of the invention to be incorporated into conventional irrigation systems which do not have a flowmeter incorporated into each of their irrigation branches.

Therefore, it is necessary to have an irrigation system that is capable not only of obtaining an effective algorithm in terms of irrigation programming by measuring the variables existing in the operating environment, but that is also capable of addressing other issues, such as the possibility of incorporating the system of the invention in previously installed conventional irrigation systems which do not have a flowmeter for measuring flow. This possibility provided by the invention allows, on the one hand, to improve conventional irrigation systems without having to change all the equipment for a new one, in addition to the fact that it is not necessary to construct additional civil works to those already existing for the incorporation of flowmeters in the different irrigation branches which are energized directly with the existing underground cables. The incorporation of the flowmeter within the irrigation system allows maintaining a constant and real-time measurement of the flow of water that circulates through each of the irrigation branches with which it is possible to detect a malfunction of a sprinkler or leaks that may exist, for example, by comparing the data with the records stored by the system through constant measurements. This and other advantages associated with other aspects of technology are described in greater detail below.

### DESCRIPTION OF THE INVENTION

The invention relates to an irrigation system which allows, in real time and automatically, to measure the flow of water and alert on anomalies in the normal operation of the system, such as the detection of water leaks and/or non-operation of some of its components, thus optimizing its consumption and facilitating the user experience.

According to a first preferred embodiment of the invention, the irrigation system comprises:
- at least one water supply means to supply water to the irrigation system;
- at least one pipe connected at one end to the water supply and extending across the surface to be irrigated;
- at least one valve arranged in the at least one pipe to control the flow of water therethrough;
- at least one sprinkler connected to at least one outlet of the at least one pipe;
- at least one flowmeter to measure the flow of water;
- at least one control means to control the operation of the irrigation system;
- at least one cable connected to the at least one control means for energizing the at least one valve; and
- at least one climatic data storage means which sends at least one evapotranspiration data from the geographical area of the irrigation system operation to at least one control means.

Through the irrigation system of the invention, it is possible to maintain constant monitoring of the flow of water that circulates through each of the pipes of the system, in order to alert the user in case an anomaly is detected which may be caused due to a leak and/or malfunction of some component, such as the valve or the sprinkler.

Furthermore, through climatic data storage means it is possible to obtain information about all the meteorological variables of interest, as well as evapotranspiration data from the irrigation system operating area.

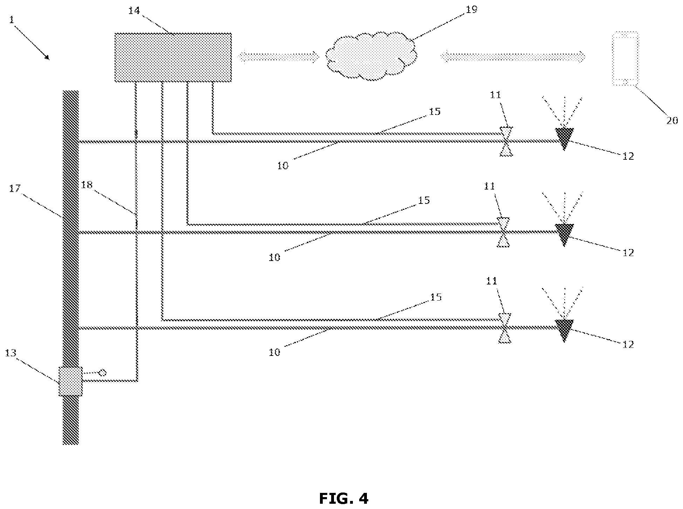

According to another embodiment of the invention, the at least one flowmeter is located in at least one pipe of the at least one water supply means. This embodiment refers to the fact that the flowmeter may be located in the main pipe that transports water from the water supply to the rest of the pipes that make up the different branches or irrigation circuits (see Figure 4).

According to another embodiment of the invention, the system further comprises at least one cable connected to the at least one control means to energize the at least one flowmeter. Said cable corresponds to an additional cable to the existing one for connecting the different valves, because generally the location of the flowmeter in this embodiment will be far from said valves, to be able to use the same cable (see Figure 4).

According to another embodiment of the invention, the at least one flowmeter is located in the at least one pipe which generally corresponds to the same pipes where the valves and sprinklers are located.

According to another embodiment of the invention, the at least one flowmeter is energized through the at least one cable that is already connected to the at least one valve without the need to carry out an additional installation. In this embodiment of the invention, the same cable that energizes the valve is used to also energize the flowmeter, taking advantage of the fact that both elements are arranged within the cable path. This allows the irrigation system of the invention to avoid the need to install additional cables or carry out civil works to energize the flowmeter, in case the system is installed on a previously installed conventional irrigation system, for example, which does not include all the features of the present invention.

According to another embodiment of the invention, the at least one flowmeter comprises at least two ultrasonic sensors or corresponds to a pulse flowmeter.

According to another embodiment of the invention, the system further comprises at least one manometer to measure the pressure in the at least one pipe. Preferably, the irrigation system of the invention comprises one or more sensors capable of measuring different climatic or ground variables, such as humidity, temperature, soil pH, wind speed, radiation, among others that are necessary for determining the irrigation programs.

According to another embodiment of the invention, the system further comprises at least one transmitter means for sending data on the flow of water obtained by the at least one flowmeter to the at least one control means.

According to another embodiment of the invention, the at least one transmitter means also sends pressure data obtained by the at least one manometer to the at least one control means.

According to another embodiment of the invention, data transmission is carried out through wireless communication, such as Bluetooth, WI-FI, infrared, LoRa, 3G, 4G, 5G or through any other means that allows wireless communication.

According to another embodiment of the invention, data transmission is carried out through cable communication.

According to another embodiment of the invention, the system further comprises at least one local data storage and management cloud which is configured for:
- receiving the water flow data from the at least one control means;
- sending the water flow data to at least one user device;
- receiving operating instructions from the at least one user device; and
- sending operating instructions to the at least one control means.

According to another embodiment of the invention, the at least one user device corresponds to one of a mobile phone, a tablet, a laptop or a desktop computer.

Said local data storage and management cloud allows establishing a link between the irrigation system control means and the user device, thus providing the possibility for the user to observe the operation of the system in real time, as well as also providing options so that it can make modifications to the irrigation program without the need to go to the physical place where the control means is installed.

According to another embodiment of the invention, the system further comprises at least one central data storage and management cloud which receives and stores the water flow data from the at least one local data storage and management cloud.

According to another embodiment of the invention:
- the at least one local data storage and management cloud receives requirements from the at least one control means about climatic parameters of the geographical area of the irrigation system operation;
- the at least one local data storage and management cloud sends the climatic parameters requirements to the at least one central data storage and management cloud;
- the at least one central data storage and management cloud retrieves the climatic parameters from the at least one climatic data storage means;
- the at least one central data storage and management cloud sends the climatic parameters to the local data storage and management cloud; and
- the at least one local data storage and management cloud sends the climatic parameters to the at least one control means.

According to another embodiment of the invention, the at least one climatic data storage means corresponds to a climatic database.

According to another embodiment of the invention, the at least one climatic data storage means corresponds to a meteorological station arranged in the geographical area of the irrigation system operation.

The central data storage and management cloud acts as a central operator which receives information from the irrigation system or information request from the local data storage and management cloud, wherein both clouds have the capacity to store all the information regarding the irrigation system operation, irrigation programs, climatic variables obtained through the different sensors or from the climatic data storage means, among others. This allows the system to continually provide feedback, to improve accuracy when determining the appropriate irrigation programs for the irrigation area. Preferably, the system of the invention uses machine learning processes to improve the determination of irrigation programs.

Furthermore, in a preferred configuration, the central data storage and management cloud can receive and storing information from multiple local data storage and management clouds comprised of different irrigation systems. This allows the method of the invention to operate multiple irrigation systems through a single central data storage and management cloud which will provide the information related to the climatic variables that each of the systems requires.

According to another embodiment of the invention, the climatic parameters comprise at least one of temperature, relative air humidity, probability of rain, wind speed, ground temperature and/or ground humidity.

According to another embodiment of the invention, the data transmission to and from the at least one local data storage and management cloud, the at least one user device, the at least one central data storage and management cloud and the at least one climatic data storage means is carried out through wireless communication, such as Bluetooth, WI-FI, infrared, LoRa, 3G, 4G, 5G or through any other means that allows wireless communication.

According to another embodiment of the invention, the data transmission to and from the at least one local data storage and management cloud, the at least one user device, the at least one central data storage and management cloud and the at least one climatic data storage means is carried out through cable communication.

In this sense, the irrigation system of the invention is also capable of operating in the event that the communication between the different clouds and components of the system is affected by a loss of signal, in case the communication is carried out through Internet or other medium that may be affected, wherein the irrigation system is configured to obtain and store weather forecasts for several days, in order to continue its operation in the event that communication with the climatic data storage means is lost, for example, or with any other element of the system.

On the other hand, according to a second preferred embodiment of the invention, an irrigation control and management method is also described which allows, in real time and automatically, to measure the flow of water and alert on anomalies in the normal operation of the system, such as the detection of water leaks and/or the non-operation of some of its components, thus optimizing its consumption and facilitating the user experience, which includes the stages of:
a) turning on at least one control means which energizes at least one valve by at least one cable;
b) selecting an irrigation program or immediately starting the irrigation process in the at least one control means;
c) identifying at least one pipe associated with the at least one valve which forms at least one irrigation circuit;
d) counting at least one sprinkler associated with the at least one valve;
e) specifying at least one irrigation angle of the at least one sprinkler;
f) storing at least one area associated with at least one irrigation circuit;
g) calculating the amount of water that will be irrigated on each area associated with the at least one irrigation circuit;
h) incorporating into the data delivered to the at least one irrigation circuit, the proportion of water that the at least one sprinkler will provide depending on its irrigation angle;
i) assigning a crop factor (Kc) to the at least one irrigation circuit depending on the species to be irrigated that have been assigned to it;
j) supplying water from at least one water supply means for a given time;
k) measuring the flow of water through at least one flowmeter in the at least one irrigation circuit associated with the at least one valve;
l) storing water flow data;
m) storing a user-defined watering schedule;
n) communicating the at least one control means with at least one climatic data storage means to receive at least one evapotranspiration value of the geographical area of the irrigation system operation;
o) storing at least one evapotranspiration value to irrigate during the same day it is received or the next depending on the irrigation schedule defined in stage m), the amount of rain fallen in that geographical area and the water demand of the area associated with the irrigation circuit;
p) calculating the daily water demand for the at least one irrigation circuit;
q) calculating the irrigation time for the at least one irrigation circuit for each irrigation event that occurs during the day;
r) waiting for the next irrigation event according to the irrigation schedule defined in step m);
s) watering the at least one irrigation circuit;
t) repeating stages j) and k) each time an irrigation event is carried out; and
u) repeating stages a)-s) automatically and with a frequency depending on the water balance to be replaced daily for the set of areas associated with the at least one irrigation circuit.

When observing the method of the invention, it is possible to see that its operation is completely different from traditional irrigation systems, wherein the determination of the irrigation programs not only depends on the climatic variables or the time that the user wants the system to irrigate, but also takes into consideration variables related to the area to be irrigated by the system, as well as the number and angle of operation of the different sprinklers. This is a substantial change with respect to the systems of the state of the art, since the system of the invention is based on first calculating the liters of water that an irrigation area needs and then calculating the operation time, instead of determining firstly the operating time of the system without any notion of the amount of water delivered, which is ineffective, since it could be watering for a shorter or longer time than necessary for a given area, as the amount of water that the system requires is unknown.

In addition, the method of the invention also considers the assignment of a crop factor (Kc) to the different branches or irrigation circuits that make up the complete irrigation system, wherein the value of this factor will depend exclusively on the species that are arranged in each of these irrigation circuits. This will finally allow us to determine exactly the amount of water that each of these circuits or branches requires to remain in optimal conditions avoiding episodes of over-irrigation or under-irrigation which can seriously harm the species that are planted.

On the other hand, stages j) and k) of the method aim to ensure that each time an irrigation event is going to start, the flow of water that circulates through the different irrigation circuits that will become operational is first measured, in order to detect possible water leaks or the malfunction of any component, so as to alert the user to take the corresponding measures. Preferably, the method is configured to stop the irrigation program if a high probability of a water leak or component failure is detected.

According to another embodiment of the invention, measuring the flow of water by means of the at least one flowmeter is carried out in at least one pipe of the at least one water supply means, in which the at least one flowmeter is arranged.

According to another embodiment of the invention, turning on at least one control means further comprises energizing the at least one flowmeter through at least one cable.

According to another embodiment of the invention, measuring the flow of water by means of at least one flowmeter is carried out in the at least one pipe, in which the at least one flowmeter is arranged.

According to another embodiment of the invention, turning on at least one control means also comprises energizing the at least one flowmeter through the at least one cable, without the need to carry out an additional installation.

According to another embodiment of the invention, the method further comprises sending data on the flow of water from the at least one flowmeter to the at least one control means through at least one transmitter means.

According to another embodiment of the invention, the method further comprises measuring the pressure in the at least one pipe using at least one manometer.

According to another embodiment of the invention, the method further comprises sending data about the pressure in the at least one pipe from the at least one manometer to the at least one control means through the at least one transmitter means.

According to another embodiment of the invention, the method further comprises:
- receiving the water flow data in at least one local data storage and management cloud from the at least one control means;
- sending the water flow data from the at least one local data storage and management cloud to the at least one user device;
- receiving operating instructions in the at least one local data storage and management cloud from the at least one user device; and
- sending operating instructions from the at least one local data storage and management cloud to the at least one control means.

According to another embodiment of the invention, the method further comprises receiving and storing through at least one central data storage and management cloud, the water flow data from the at least one local data storage and management cloud.

According to another embodiment of the invention, the method further comprises:
- receiving requirements about climatic parameters of the irrigation area in the at least one local data storage and management cloud, from the at least one control means;
- sending the climate parameter requirements from the at least one local data storage and management cloud to the central data storage and management cloud;
- recovering the climatic parameters from the at least one climatic data storage means through the at least one central data storage and management cloud;
- sending the climatic parameters from the at least one central data storage and management cloud to the local data storage and management cloud; and
- sending the climatic parameters from the at least one local data storage and management cloud to the at least one control means.

According to another embodiment of the invention, the method further comprises comparing the water flow data acquired by the at least one flowmeter with ranges previously stored in the at least one control means.

According to another embodiment of the invention, the method further comprises comparing the pressure data acquired by the at least one manometer with ranges previously stored in the at least one control means.

This comparison of data carried out by the method of the invention can be made in relation to the data previously included by the user or in relation to the same data previously measured by the flowmeter, in order to keep statistics of the average value of each variable, wherein the system will alert the user in case the measured value deviates a certain percentage from the average or user-predefined value, as described below.

According to another embodiment of the invention, the method further comprises sending an alert from the at least one control means to the at least one user device, in case the water flow data is not within the previously specified ranges stored in the at least one control means.

According to another embodiment of the invention, the method further comprises sending an alert from the at least one control means to the at least one user device, in case the pressure data is not within the ranges previously stored in the at least one means of control.

According to another embodiment of the invention, the method further comprises sending an alert from the at least one control means to the at least one user device, in case the control means determines, after comparing the measured data and the previously stored ranges, that there is a probability of a water leak in the at least one pipe.

According to another embodiment of the invention, it further comprises sending an alert from the at least one control means to the at least one user device, in case the control means determines, after comparing the measured data and the previously stored ranges, that there is a probability that the at least one sprinkler has a failure or breakage.

The method of the invention is not based on visually detecting a leak or failure of any component, but rather, through the data collected on water flow and/or pressure a probability is established that one of these two events may be occurring, when the information collected is compared with the information previously entered by the user or with the historical data stored by the system, wherein the system will become more accurate in its predictions as the amount of data stored is greater, in a continuous learning process of the irrigation system. In this sense, the irrigation system includes predefined values for the value of the probabilities of leakage, breakage or failure, for which the client must be alerted, thus avoiding false alarms, however, this configuration can be modified by the user.

According to another embodiment of the invention, the method further comprises redefining the irrigation program if the at least one control means identifies unscheduled natural irrigation events, according to the received climatic parameters.

In view of the previous description, it can be appreciated the need to have irrigation systems and methods that not only base their operation on climatic variables and irrigation time, but are based on the determination of the amount of water necessary for the irrigation of each sector within an irrigation zone which allows not only to keep the species to be irrigated healthy, avoiding under-irrigation and over-irrigation events, but also allows to truly optimize the use of water which is a resource increasingly scarce.

### BRIEF DESCRIPTION OF THE FIGURES

As part of the present invention, the following representative Figures are exhibited which show preferred configurations of the invention and, therefore, should not be considered as limitations to the definition of the claimed subject matter.
Figure 1 shows an operation diagram of the irrigation system in a branch according to a preferred configuration of the invention.
Figure 2 shows an interior view of the operation of the flowmeter according to a preferred configuration of the invention.
Figure 3 shows a diagram of the elements arrangement of the irrigation system in multiple irrigation branches or circuits according to a preferred configuration of the invention.
Figure 4 shows a diagram of the elements arrangement of the irrigation system in multiple irrigation branches or circuits according to another preferred configuration of the invention.

### DETAILED DESCRIPTION OF THE FIGURES

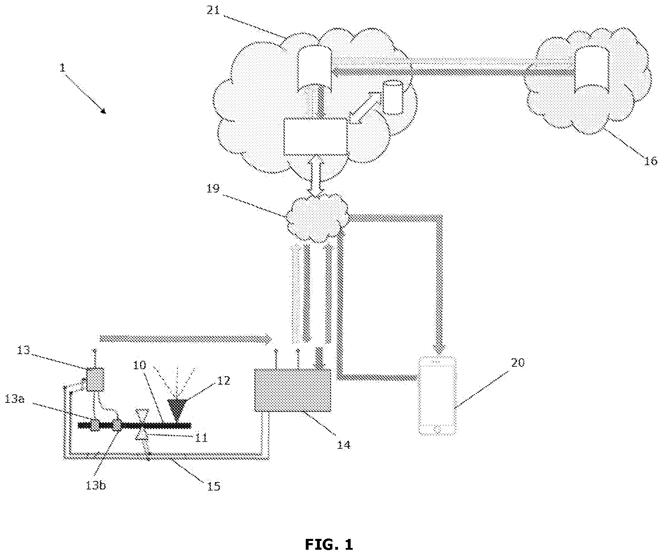

With reference to the accompanying Figures, Figure 1 shows an operation diagram of the irrigation system (1) in an irrigation branch or circuit, wherein it is possible to observe all its main components. On the one hand, it is observed that the irrigation system (1) comprises a pipe (10) which transports water from a water supply (not shown in the Figures). In most installations, the water pressure from the water supply will be sufficient to transport the water through the various irrigation circuits, wherein if the water pressure is insufficient a pump will be installed (not shown in the Figures), so that it can be ejected with sufficient force by the sprinkler (12). The passage of water is controlled through a solenoid valve (11) which receives operating instructions from a control means (14). The irrigation system (1) also comprises an ultrasonic flowmeter (13) which includes at least two ultrasonic sensors (13a, 13b). Both the valve (11) and the flowmeter (13) are energized by a single cable (15). This is very important, since the irrigation system (1) may be implemented as a complement to an irrigation system in operation, wherein, to energize the flowmeter (13) the same existing installation is used, without the need to install new cables or carrying out expensive and time-consuming civil works for their implementation. In any case, in a preferred configuration of the invention, it is possible that the irrigation system (1) comprises different cables to energize the valve (11) and the flowmeter (13) (see description of Figure 4).

Figure 1 also shows the data management carried out by the irrigation system (1), wherein the control means (14) receives the information collected through the flowmeter (13), as well as other devices and/or or sensors that may be incorporated, such as manometers, pH sensors, radiation meters, etc. Once the control means (14) receives this information, it sends it to a local data storage and management cloud (19) which in turn processes the information to send it to a user device (20) which in this case it corresponds to a smart mobile phone. The local data storage and management cloud (19) also has the task of sending the information received from the control means (14) to a central data storage and management cloud (21) which has the capacity to receive and store information from multiple irrigation systems (1) operating in different locations. Said central data storage and management cloud (21) has the task of acquiring information regarding the existing climatic conditions in each of the areas where the irrigation systems (1) are operating from a climatic data storage means (16). Once this information is acquired, it is sent to the local data storage and management cloud (19) which finally transmits the information to the control means (14).

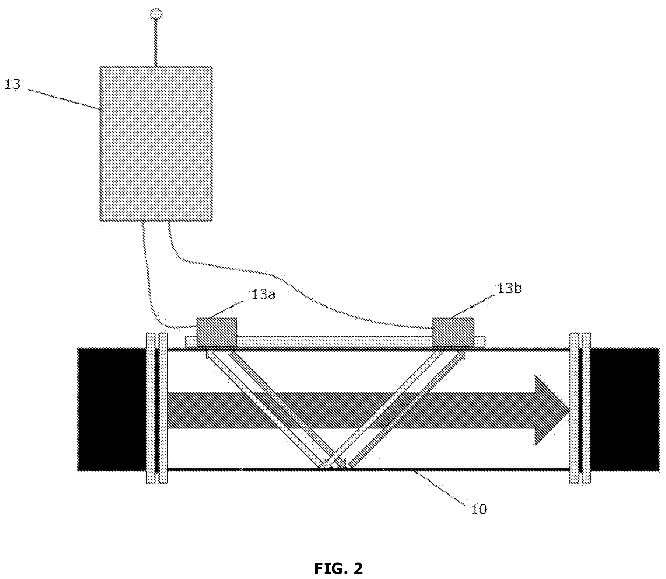

In relation to Figure 2, the operation of the ultrasonic flowmeter (13) is observed which comprises two ultrasonic sensors (13a, 13b) arranged in the pipe (10). The principle used to measure the speed of the fluid flowing through the pipe corresponds to the so-called transit time, under which the time differential between the signals sent upstream and downstream is measured, this differential being directly proportional to the speed of the water. Specifically, ultrasonic waves are transmitted upstream and downstream through the pipe wall and the water flowing in the pipe. By measuring the difference in travel time and knowing the size of the pipe the flowmeter determines the velocity and flow rate.

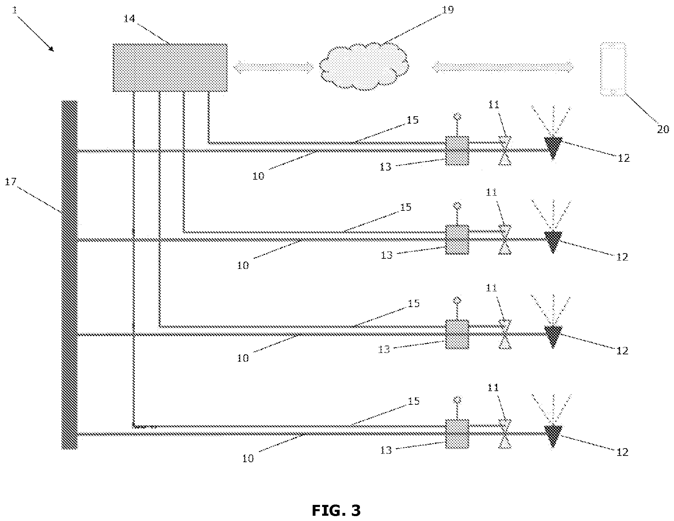

On the other hand, Figure 3 shows a diagram of the layout of the irrigation system (1) but with multiple irrigation circuits. As can be seen, each of the branches comprises a pipe (10) connected to a main pipe (17) which transports water from the water supply, wherein in each of the pipes (10) a flowmeter (13), a valve (11) and a sprinkler (12) are arranged, wherein both the flowmeter (13) and the valve (11) are energized by a single cable (15) arranged in each of the branches which, as mentioned above, provides an advantage over the state-of-the-art solutions, since in cases where the irrigation system (1) is installed in a previously existing system, it is not necessary to carry out major works for the installation of the flowmeter (13).

Finally, Figure 4 shows an arrangement like that exhibited in Figure 4 but where there is only one flowmeter (13) arranged in the main pipe (17). This configuration may be interesting to apply in smaller irrigation systems, wherein each of the branches has a relatively short length. It is also possible to see in this Figure that the flowmeter (13) is energized through a cable (18) in addition to the cables that energize the valves (11). However, it is also possible to extend some of the cables (15) towards the location of the flowmeter (13), so as not to have to bury a new key that would make the installation more expensive.

### NUMERICAL REFERENCES

- 1: Irrigation system
- 10: Pipe
- 1 1: Valve
- 12: Sprinkler
- 13: Flowmeter
- 13a, 13b: Ultrasonic sensor
- 14: Control means
- 15: Cable
- 16: Climatic data storage means
- 17: Pipe
- 18: Cable
- 19: Local data storage and management cloud
- 20: User device
- 21: Central data storage and management cloud

## Claims

1. An irrigation system (1) which allows in real time and automatically, to measure the flow of water and alert about anomalies in the normal operation of the system, such as the detection of water leaks and/or the non-operation of some of its components, thus optimizing its consumption and facilitating the user experience, **CHARACTERIZED in that** it includes:
- at least one water supply means, to supply water to the irrigation system (1);
- at least one pipe (10), connected at one end to the water supply and extending across the surface to be irrigated;
- at least one valve (11) arranged in the at least one pipe (10) to control the flow of water through it;
- at least one sprinkler (12) connected to at least one outlet of the at least one pipe (10);
- at least one flowmeter (13) to measure the flow of water;
- at least one control means (14) to control the operation of the irrigation system (1);
- at least one cable (15), connected to the at least one control means (14) to energize the at least one valve (11); and
- at least one climatic data storage means (16) which sends at least one evapotranspiration data from the geographical area of the irrigation system operation (1) to the at least one control means (14).

2. The irrigation system (1) according to claim 1, **CHARACTERIZED in that** the at least one flowmeter (13) is located in at least one pipe (17) of the at least one water supply means.

3. The irrigation system (1) according to claim 2, **CHARACTERIZED in that** it also comprises at least one cable (18) connected to the at least one control means (14) to energize the at least one flowmeter (13).

4. The irrigation system (1) according to claim 1, **CHARACTERIZED in that** the at least one flowmeter (13) is located in the at least one pipe (10).

5. The irrigation system (1) according to claim 4, **CHARACTERIZED in that** the at least one flowmeter (13) is energized through the at least one cable (15) that is already connected to the at least one valve (11) without the need for additional installation.

6. The irrigation system (1) according to any of claims 1-5, **CHARACTERIZED in that** the at least one flowmeter (13) comprises at least two ultrasonic sensors (13a, 13b) or corresponds to a pulse flowmeter.

7. The irrigation system (1) according to any of claims 1-6, **CHARACTERIZED in that** it also comprises at least one manometer to measure the pressure in the at least one pipe (10).

8. The irrigation system (1) according to any of claims 6-7, **CHARACTERIZED in that** it also comprises at least one transmitter means to send data on the flow of water obtained by the at least one flowmeter (13), to the at least one control means (14).

9. The irrigation system (1) according to claim 8, **CHARACTERIZED in that** the at least one transmitter means also sends data on the pressure obtained by the at least one manometer to the at least one control means (14).

10. The irrigation system (1) according to any of claims 8-9, **CHARACTERIZED in that** the data transmission is carried out through wireless communication, such as Bluetooth, WI-FI, infrared, LoRa, 3G, 4G, 5G or through any other means that allows wireless communication.

11. The irrigation system (1) according to any of claims 8-9, **CHARACTERIZED in that** the data transmission is carried out through cable communication.

12. The irrigation system (1) according to any of claims 1-11, **CHARACTERIZED in that** it also comprises at least one local data storage and management cloud (19), which is configured for:
- receiving the water flow data from the at least one control means (14);
- sending the water flow data to at least one user device (20);
- receiving operating instructions from the at least one user device (20); and
- sending the operating instructions to the at least one control means (14).

13. The irrigation system (1) according to claim 12, **CHARACTERIZED in that** the at least one user device (20) corresponds to one of a mobile phone, a tablet, a laptop or a desktop computer.

14. The irrigation system (1) according to any of claims 12-13, **CHARACTERIZED in that** it also comprises at least one central data storage and management cloud (21) which receives and stores the water flow data from the at least one local data storage and management cloud (19).

15. The irrigation system (1) according to any of claims 12-14, **CHARACTERIZED in that**:
- the at least one local data storage and management cloud (19) receives requirements from the at least one control means (14) about climatic parameters of the geographical area of the irrigation system operation (1);
- the at least one local data storage and management cloud (19) sends the climate parameter requirements to the at least one central data storage and management cloud (21);
- the at least one central data storage and management cloud (21) recovers the climate parameters from the at least one climate data storage means (16);
- the at least one central data storage and management cloud (21) sends the climate parameters to the local data storage and management cloud (19); and
- The at least one local data storage and management cloud (19) sends the climate parameters to the at least one control means (16).

16. The irrigation system (1) according to any of claims 1-15, **CHARACTERIZED in that** the at least one climate data storage means (16) corresponds to a climate database.

17. The irrigation system (1) according to any of claims 1-15, **CHARACTERIZED in that** the at least one climate data storage means (16) corresponds to a meteorological station arranged in the geographical area of the irrigation system operation (1).

18. The irrigation system (1) according to any of claims 1-17, **CHARACTERIZED in that** the climatic parameters comprise at least one of temperature, relative humidity of the air, probability of rain, wind speed, ground temperature and/or soil humidity.

19. The irrigation system (1) according to any of claims 12-18, **CHARACTERIZED in that** the transmission of data to and from the at least one local data storage and management cloud (19), the at least one user device (20), the at least one central data storage and management cloud (21) and the at least one climate data storage means (16) is carried out through wireless communication, such as Bluetooth, WI-FI, infrared, LoRa, 3G, 4G, 5G or through any other means that allows wireless communication.

20. The irrigation system (1) according to any of claims 12-18, **CHARACTERIZED in that** the transmission of data to and from the at least one local data storage and management cloud (19), the at least one user device (20), the at least one central data storage and management cloud (21) and the at least one climate data storage means (16) is carried out through cable communication.

21. A method of irrigation control and management which allows, in real time and automatically, to measure the flow of water and alert about anomalies in the normal operation of the system, such as the detection of water leaks and/or non-operation of some of its components, thus optimizing its consumption and facilitating the user experience, **CHARACTERIZED in that** it includes the stages of:
a) turning on at least one control means (14) which energizes at least one valve (11) through at least one cable (15);
b) selecting an irrigation program or immediately starting the irrigation process in the at least one control means (14);
c) identifying at least one pipe (10) associated with the at least one valve (11) which forms at least one irrigation circuit;
d) counting at least one sprinkler (12) associated with the at least one valve (11);
e) specifying at least one irrigation angle of the at least one sprinkler (12);
f) storing at least one area associated with the at least one irrigation circuit;
g) calculating the amount of water that will be irrigated on each area associated with the at least one irrigation circuit;
h) incorporating into the data delivered to the at least one irrigation circuit, the proportion of water that the at least one sprinkler (12) will provide depending on its irrigation angle;
i) assigning a crop factor (Kc) to the at least one irrigation circuit, depending on the species to be irrigated that have been assigned to it;
j) supplying water from at least one water supply means for a given time;
k) measuring the flow of water through at least one flowmeter (13) in the at least one irrigation circuit associated with the at least one valve (11);
l) storing water flow data;
m) storing a user-defined irrigation schedule;
n) communicating the at least one control means (14) with at least one climate data storage means (16) to receive at least one evapotranspiration value of the geographical area of the irrigation system operation (1);
o) storing the at least one evapotranspiration value to irrigate during the same day it is received or the next, depending on the irrigation schedule defined in stage m), the amount of rain fallen **in that** geographical area and the water demand of the area associated with the irrigation circuit;
p) calculating the daily water demand for at least one irrigation circuit;
q) calculating the irrigation time for the at least one irrigation circuit for each irrigation event that occurs during the day;
r) waiting for the next irrigation event according to the irrigation schedule defined in step m);
s) watering the at least one irrigation circuit;
t) repeating stages j) and k) each time an irrigation event is carried out; and
u) repeating stages a)- s) automatically and with a frequency depending on the water balance to be replaced daily for the set of areas associated with the at least one irrigation circuit.

22. The method according to claim 21, **CHARACTERIZED in that** measuring the flow of water by means of the at least one flowmeter (13) is carried out in the at least one pipe (17) of the at least one water supply means in which the at least one flowmeter (13) is arranged.

23. The method according to claim 22, **CHARACTERIZED in that** turning on at least one control means (14) further comprises energizing the at least one flowmeter (13) by means of at least one cable (18).

24. The method according to claim 21, **CHARACTERIZED in that** measuring the water flow by means of at least one flowmeter (13) is carried out in the at least one pipe (10) in which the at least one flowmeter (13) is arranged.

25. The method according to claim 24, **CHARACTERIZED in that** turning on at least one control means (14) also comprises energizing the at least one flowmeter (13) through the at least one cable (15) without the need to carry out an additional installation.

26. The method according to any of claims 21-25, **CHARACTERIZED in that** it also comprises sending data on the flow of water from the at least one flowmeter (13) to the at least one control means (14) through at least one transmitter means.

27. The method according to any of claims 21-26, **CHARACTERIZED in that** it also comprises measuring the pressure in the at least one pipe (10) using at least one manometer.

28. The method according to claim 27, **CHARACTERIZED in that** it also comprises sending data about the pressure in the at least one pipe (10) from the at least one manometer to the at least one control means (14) through the at least one transmitter means.

29. The method according to any of claims 22-27, **CHARACTERIZED in that** it also comprises:
- receiving the water flow data in at least one local data storage and management cloud (19) from the at least one control means (14);
- sending the water flow data from the at least one local data storage and management cloud (19) to at least one user device (20);
- receiving operating instructions in the at least one local data storage and management cloud (19) from the at least one user device (20); and
- sending the operating instructions from the at least one local data storage and management cloud (19) to the at least one control means (14).

30. The method according to claim 28, **CHARACTERIZED in that** it also comprises receiving and storing, through at least one central data storage and management cloud (21), the water flow data from the at least one local data storage and management cloud (19).

31. The method according to claim 29, **CHARACTERIZED in that** it also comprises:
- receiving requirements about climatic parameters of the irrigation area in the at least one local data storage and management cloud (19) from the at least one control means (14);
- sending the requirements for climate parameters from the at least one local data storage and management cloud (19) to the central data storage and management cloud (21);
- recovering the climatic parameters from the at least one climatic data storage means (16) through the at least one central data storage and management cloud (21);
- sending the climatic parameters from the at least one central data storage and management cloud (21) to the local data storage and management cloud (19); and
- sending the climatic parameters from the at least one local data storage and management cloud (19), to the at least one control means (14).

32. The method according to any of claims 21-31, **CHARACTERIZED in that** it also comprises comparing the water flow data acquired by the at least one flowmeter (13) with ranges previously stored in the at least one control means (14).

33. The method according to any of claims 27-32, **CHARACTERIZED in that** it also comprises comparing the pressure data acquired by the at least one manometer with ranges previously stored in the at least one control means (14).

34. The method according to claim 32, **CHARACTERIZED in that** it also comprises sending an alert from the at least one control means (14) to the at least one user device (20) in case the water flow data is not within the ranges previously stored in the at least one control means (14).

35. The method according to claim 33, **CHARACTERIZED in that** it also comprises sending an alert from the at least one control means (14) to the at least one user device (20), in case the pressure data is not within the ranges previously stored in the at least one control means (14).

36. The method according to any of claims 32-35, **CHARACTERIZED in that** it also comprises sending an alert from the at least one control means (14) to the at least one user device (20), in case the control means (14) determines, after comparing the measured data and the previously stored ranges, that there is a probability of a water leak in the at least one pipe (10).

37. The method according to any of claims 32-35, **CHARACTERIZED in that** it also comprises sending an alert from the at least one control means (14) to the at least one user device (20), in case the control means control (14) determines, after comparing the measured data and the previously stored ranges, that there is a probability that the at least one sprinkler (12) has a failure or breakage.

38. The method according to any of claims 21-37, **CHARACTERIZED in that** it also comprises redefining the irrigation program if the at least one control means (14) identifies unscheduled natural irrigation events according to the received climatic parameters.
